# EUROPÄISCHE PATENTANMELDUNG

(11) **EP 2 281 702 A2**
(43) Veröffentlichungstag der Anmeldung: **09.02.2011**
(21) Anmeldenummer: 10167111.3
(22) Anmeldetag: 24.06.2010
(51) Int. Cl.: B60G 11/27, F16F 9/04

(54) **Pneumatische Federungs- und Dämpfungsvorrichtung**

(30) Priorität: 07.08.2009 DE 102009026347
(71) Anmelder: Continental Teves AG & Co. oHG, 60488 Frankfurt (DE)
(72) Erfinder: Behmenburg, Christof Dr., 31867 Lauenau (DE); Gleu, Jens-Uwe Dr., 30855 Langenhagen (DE)
(74) Vertreter: Finger, Karsten

(57) **Zusammenfassung**

Pneumatische Federungs- und Dämpfungsvorrichtung für Fahrzeuge, bei der zwei mit Druckgas gefüllte Luftfedern (4,5) vorgesehen sind, die zwei jeweils in ihrem Volumen veränderbare konzentrische Arbeitsräume (6,7) bilden, die übereinander angeordnet sind, wobei ein oberer Deckel (13) der ersten Luftfeder über eine mittig und konzentrisch innerhalb der Arbeitsräume angeordnete und durch den unteren Deckel (12) der zweiten Luftfeder geführten Stange (14) mit einem unteren Abrollkolben (8) der zweiten Luftfeder in Verbindung steht.

## Beschreibung

Die Erfindung betrifft ein eine pneumatische Federungs- und Dämpfungsvorrichtung, insbesondere für Fahrzeuge, welche vorzugsweise im oberen Bereich karosseriefest und im unteren Bereich an einer Radaufhängung befestigbar ist, enthaltend mindestens zwei mit Druckgas gefüllte, über einen Luftanschluss an eine Druckgasquelle anschließbare, hermetisch abgeschlossene Luftfedern aufweist, wobei jede Luftfeder einen jeweils in seinem Volumen veränderbaren Arbeitsraum bildet, d.h. den Arbeitsraum mindestens teilweise umschließt. Die Luftfedern rollen auf einer Abrollkontur ab und stehen über ein in zwei Richtungen durchströmbares Drosselorgan in Verbindung. Dabei sind die Luftfedern übereinander angeordnet sind und die Abrollkontur der ersten Luftfeder durch die zweite Luftfeder derart vorgegeben, dass die erste Luftfeder über der zweiten Luftfeder abrollt. Ein oberer Deckel der ersten Luftfeder steht über ein Verbindungselement mit einem Abrollkolben der zweiten Luftfeder in Verbindung und ein Deckel der zweiten Luftfeder mit der Radaufhängung in Verbindung

Die DE-OS 24 06 835 A1 offenbart eine Federungs- und Dämpfungsvorrichtung mit Luftdämpfung. Bei der aus dieser Druckschrift bekannten Federungs- und Dämpfungsvorrichtung stehen ein Federungsraum, der sich mittels eines Rollbalges beim Einfedern verkleinert und beim Ausfedern vergrössert, und ein Dämpferraum, welcher mittels eines Rollbalges in seinem Volumen veränderlich ist, über ein in beiden Richtungen durchströmbares Drosselorgan in Verbindung. Das in seinem Querschnitt H-fömige Gehäuse der Federungs- und Dämpfungsvorrichtung ist fest mit dem Fahrzeugrahmen verbunden. Die jeweiligen Abrollkolben der Federungs- und Dämpfungsräume stützen sich gegen die jeweiligen oberen und/oder unteren Querlenker der Radaufhängung ab. Diese Ausführung einer Federungs- und Dämpfungsvorrichtung mit dem im Querschnitt H-förmigen Gehäuse führt zu einer aufwendigen Konstruktion der Radaufhängung, insbesondere der fahrzeugaufbaufesten Verbindung, und zu einem erhöhten Bauraumbedarf.

Die DE 3436664 A1 offenbart eine Membran-Luftfeder, welche ebenfalls Federung und Dämpfung bereitstellt und zwei unterschiedlich große Arbeitskammern aufweist, die jeweils teilweise durch Rollbälge nach außen begrenzt sind. Die Rollbälge stützen sich und rollen dabei auf äußeren Zylinderflächen axial beweglicher und als Hohlkolben ausgebildeter Gehäuseteile ab. Die unterschiedlich großen Arbeitskammern sind durch eine mit Drosselöffnungen versehene Wand getrennt, Durch die Drosselöffnungen kann Luft von einer Arbeitskammer in die andere strömen, wobei die entstehende Dissipation die Dämpfungsarbeit erzeugt. Die Membran-Luftfeder ist jedoch in ihrer Grundkonstruktion, bei der die als Hohlkolben ausgebildeten Gehäuseteile mit einer in der Trennwand geführten zentralen Stange verbunden sind, mit erheblichen Reibungsverlusten in dieser Führung behaftet und weist zudem eine erhebliche Baugröße auf.

Aufgabe der Erfindung ist es, eine für ein Fahrzeug geeignete pneumatische Federungs- und Dämpfungsvorrichtung zu schaffen, deren Bauraum gering ist und die ohne konstruktiven Mehraufwand in den Bauraum von herkömmlichen Federungs- und Dämpfungsvorrichtungen eingebaut werden kann und keine - insbesondere trockene - Reibung aufweist, welche zu akustischen Problemen führen kann.

Gelöst wird diese Aufgabe durch die Merkmale des Hauptanspruchs. Weitere vorteilhafte Ausbildungen sind in den Unteransprüchen offenbart.

Dabei steht ein oberer Deckel der ersten Luftfeder über eine mittig und konzentrisch innerhalb der Arbeitsräume abgeordnete und durch den Deckel er zweiten Luftfeder geführten Stange mit einem unteren Abrollkolben der zweiten Luftfeder in Verbindung. Der Bauraum ist bei dieser Ausführung besonders gering und für eine kompakte Ausbildung des gesamten Federbeines besonders förderlich.

Eine vorteilhafte Weiterbildung besteht darin, dass die zweite Luftfeder in einem an ihren oberen Deckel anschließenden Hohlzylinder geführt und durch letzteren an der Radaufhängung fest angeschlossen ist. Dadurch erreicht man eine starre und vorgegebene Abrollkontur für die erste Luftfeder und eine gleichzeitige Stützung der zweiten Luftfeder, sodass letztere relativ dünn ausgeführt werden kann.

Eine weitere vorteilhafte Weiterbildung besteht darin, dass die zweite Luftfeder einen Arbeitsraum bildet, der gegenüber der konzentrisch angeordneten Stange mit einem Faltenbalg abgedichtet ist. Der Faltenbalg bildet dann eine besonders flexible Abdichtung zwischen den beiden Arbeitsräumen, insbesondere dann, wenn der Faltenbalg als Luftzufuhrkanal für im unteren Abrollkolben angeordnete Drosseln ausgebildet ist. Eine solche Ausbildung einer Doppelfunktion ist ebenfalls günstig für die weitere Minimierung des Bauraumes.

Eine weitere vorteilhafte Weiterbildung besteht darin, dass die Drosselorgane im oberen Deckel der zweiten Luftfeder angeordnet sind. Auch dies dient einer integration von Bauteilen und damit einer besonders kompakten Ausbildung der pneumatische Federungs- und Dämpfungsvorrichtung.

Eine weitere vorteilhafte Weiterbildung in diesem Sinne besteht darin, dass die Stange für Aufnahme von elektrischen Kabeln und/oder von Mediums- oder Energieleitungen ausgebildet ist.

Anhand eines Ausführungsbeispiels soll die Erfindung näher erläutert werden. Es zeigen
- Fig. 1: eine Prinzipskizze einer erfindungsgemäßen pneumatischen Federungs- und Dämpfungsvorrichtung
- Fig. 2: eine Prinzipskizze einer weiteren Ausführung einer erfindungsgemäßen pneumatischen Federungs- und Dämpfungsvorrichtung

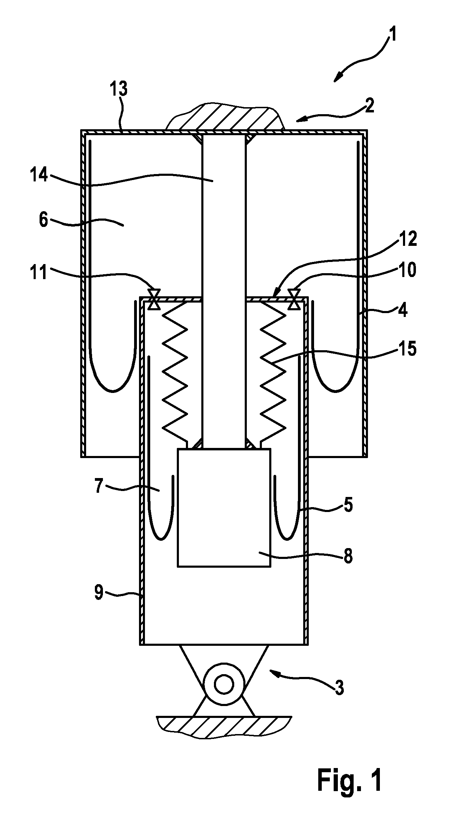

Die Fig. 1 zeigt Pneumatische Federungs- und Dämpfungsvorrichtung 1 für Fahrzeuge, welche im oberen Bereich 2 karosseriefest und im unteren Bereich 3 an einer Radaufhängung befestigbar ist. Die Federungs- und Dämpfungsvorrichtung weist zwei mit Druckgas gefüllte Luftfedern 4, 5 auf, die zwei jeweils in ihrem Volumen veränderbare Arbeitsräume 6, 7 bilden, die konzentrisch übereinander angeordnet sind.

Die Luftfedern rollen jeweils auf einer Abrollkontur ab, nämlich die untere Luftfeder 5 auf dem Abrollkolben 8 und die obere Luftfeder 4 auf der Außenfläche eines für die untere Luftfeder 5 vorgesehenen Außen- und Führungszylinders 9, d.h. eine Hohlzylinders, welcher dann die mit seiner Außenfläche die Abrollkontur bildet. Die Arbeitsräume stehen über in zwei Richtungen durchströmbare und ggf. verstellbare Drosselorgane 10, 11 miteinander in Verbindung.

Der oberer Deckel 12 der zweiten Luftfeder 5 ist über den Außen- und Führungszylinders 9 an der Radaufhängung fest angeschlossen.

Der oberer Deckel 13 der ersten Luftfeder 4 steht über eine mittig und konzentrisch innerhalb der Arbeitsräume 6, 7 angeordnete und durch den Deckel 12 der zweiten Luftfeder 5 geführten Stange 14 mit dem unteren Abrollkolben 8 der zweiten Luftfeder in Verbindung.

Der zweite Arbeitsraum 7 ist gegenüber dem ersten Arbeitsraum 6 mit einem Faltenbalg 15 abgedichtet, der die Stange 14 umgibt.

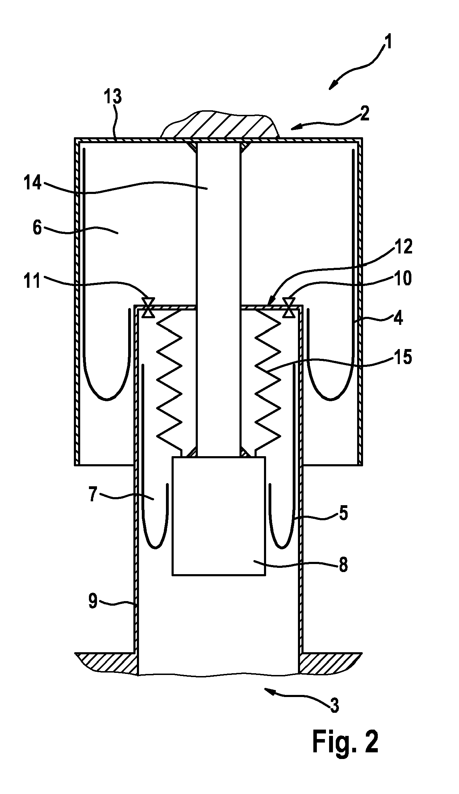

Fig. 2 zeigt eine Prinzipskizze einer weiteren Ausführung einer erfindungsgemäßen pneumatischen Federungs- und Dämpfungsvorrichtung, die sich von der Ausführung in Fig. 1 lediglich dadurch unterscheidet, dass der Außen- und Führungszylinders 9 direkt an der Radaufhängung ausgebildet ist bzw. als Teil der Radaufhängung ausgebildet ist.

### Bezugszeichenliste

### (Teil der Beschreibung)

- 1: Pneumatische Federungs- und Dämpfungsvorrichtung
- 2: Oberer Bereich
- 3: Unterer Bereich
- 4: Luftfeder
- 5: Luftfeder
- 6: Arbeitsraum
- 7: Arbeitsraum
- 8: Abrollkolben
- 9: Außen- und Führungszylinder
- 10: Drosselorgan
- 11: Drosselorgan
- 12: Deckel der zweiten Luftfeder
- 13: Deckel der ersten Luftfeder
- 14: Stange
- 15: Faltenbalg

## Patentansprüche

1. Pneumatische Federungs- und Dämpfungsvorrichtung (1) für Fahrzeuge, welche im oberen Bereich (2) karosseriefest und im unteren Bereich (3) an einer Radaufhängung befestigbar ist, wobei
- zwei mit Druckgas gefüllte Luftfedern (4, 5) vorgesehen sind, die zwei jeweils in ihrem Volumen veränderbare Arbeitsräume (6, 7) bilden, die konzentrisch übereinander angeordnet sind,
- wobei die Luftfedern (4, 5) jeweils auf einer Abrollkontur abrollen,
- wobei die Arbeitsräume (6, 7) über in zwei Richtungen durchströmbare Drosselorgane (10, 11) miteinander in Verbindung stehen,
- wobei die erste obere Luftfeder (4) auf der ggf. verstärkten oder eingefassten und als einer der Abrollkonturen ausgebildeten Außenfläche der zweiten unteren Luftfeder abrollt,
- wobei ein oberer Deckel (5) der zweiten Luftfeder an der Radaufhängung fest angeschlossen ist,
- **dadurch gekennzeichnet, dass**
- und wobei ein oberer Deckel (13) der ersten Luftfeder über eine mittig und konzentrisch innerhalb der Arbeitsräume (6, 7) angeordnete und durch den Deckel (12) der zweiten Luftfeder geführten Stange (14) mit einem unteren Abrollkolben (8) der zweiten Luftfeder (5) in Verbindung steht.

2. Federungs- und Dämpfungsvorrichtung nach Anspruch 1, bei der die zweite Luftfeder in einem an ihren oberen Deckel anschließenden Hohlzylinder (9) geführt und durch letzteren an der Radaufhängung fest angeschlossen ist.

3. Federungs- und Dämpfungsvorrichtung nach Anspruch 1 oder 2, bei der die zweite Luftfeder einen Arbeitsraum (7) bildet, der gegenüber der konzentrisch angeordneten Stange mit einem Faltenbalg (15) abgedichtet ist.

4. Federungs- und Dämpfungsvorrichtung nach Anspruch 3, bei der der Faltenbalg (15) als Luftzufuhrkanal für im unteren Abrollkolben angeordnete Drosseln ausgebildet ist.

5. Federungs- und Dämpfungsvorrichtung nach einem der Ansprüche 1 bis 5, bei der die Drosselorgane (10, 11) im oberen Deckel der zweiten Luftfeder angeordnet sind.

6. Federungs- und Dämpfungsvorrichtung nach einem der Ansprüche 1 bis 5, bei der die Stange (14) für Aufnahme von elektrischen Kabeln und/oder von Mediums- oder Energieleitungen ausgebildet ist.
